(19) Europäisches Patentamt
European Patent Office
Office européen des brevets

(11) Numéro de publication: **0 231 712**
**B1**

(12) **FASCICULE DE BREVET EUROPEEN**

(45) Date de publication du fascicule du brevet: **17.10.90**

(51) Int. Cl.⁵: **C08F 222/40**, C08G 73/12

(21) Numéro de dépôt: **86420272.6**

(22) Date de dépôt: **05.11.86**

(54) **Polymères à groupements imides et procédé de préparation.**

(30) Priorité: **13.11.85 FR 8516971**

(43) Date de publication de la demande: **12.08.87 Bulletin 87/33**

(45) Mention de la délivrance du brevet: **17.10.90 Bulletin 90/42**

(84) Etats contractants désignés: **AT BE CH DE ES FR GB IT LI LU NL SE**

(56) Documents cités: **FR-A- 2 462 458**

**Le dossier contient des informations techniques présentées postérieurement au dépôt de la demande et ne figurant pas dans le présent fascicule.**

(73) Titulaire: **RHONE-POULENC CHIMIE, 25, quai Paul Doumer, F-92408 Courbevoie Cédex(FR)**

(72) Inventeur: **Dien, René, 39 Avenue Gilbert Fabre, F-69390 Millery(FR)**
Inventeur: **Rakoutz, Michel, décédé(FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex(FR)**

**EP 0 231 712 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objets de nouveaux polymères thermostables dont l'obtention met en jeu des bis-imides.

On a déja décrit des polymères obtenus par réaction entre un N,N'-bis-imide d'acide dicarboxylique insaturé tel que par exemple un N,N'-bis-maléimide avec une diamine biprimaire [brevet français n° I 555 564]. Les quantités de N,N'-bis-imide et de diamine sont choisies de façon que le rapport :

$$\frac{\text{nombre de moles de bis-imide}}{\text{nombre de moles de diamine}}$$

soit au moins égal à I ; par ailleurs on préfère généralement qu'il soit inférieur à 50. On obtient des résines thermostables qui résistent remarquablement aux contraintes thermiques sévères.

Il est également indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploi d' une solution.

Finalement, il est mentionné que pour de nombreux emplois, il est avantageux d'opérer en deux temps ; dans un premier stade, on prépare un prépolymère par chauffage du mélange intime des deux réactifs à une température de l'ordre de I00 à 250°C. Le prépolymère obtenu peut être utilisé à l'état de solution, de suspension, de poudre ou bien être conformé encore par simple coulée à chaud. Dans un second stade, on peut provoquer le durcissement du prépolymère par chauffage jusqu'à des températures de l'ordre de 350°C, éventuellement sous pression.

Ces prépolymères peuvent être convertis en films ou en matériaux multicellulaires. Ils sont d'un intérêt tout particulier pour la préparation d'objets moulés éventuellement en association avec des charges fibreuses ou pulvérulentes ou la préparation de stratifiés à base de fibres minérales. Cependant, la préparation et la mise en œuvre de ces polymères nécessitent de prendre des précautions sur le plan de l'hygiène lorsque la diamine biprimaire utilisée est de nature aromatique du fait de la toxicité que peuvent présenter certaines d'entre elles.

On a décrit dans le document FR-A 2 462 458 des polymères à groupements imides pouvant être obtenus à partir d'un N,N'-bis-imide et d'un co-réactif qui n'est pas une diamine bimprimaire aromatique. A titre de pareil co-réactif, on propose par exemple des composés comportant un radical insaturé de type vinyle qui est porté par un reste aniline ou un reste phénol ou ester de phénol. Mais il convient de noter que les co-réactifs de cet art antérieur sont présentés et exemplifiés comme procurant une réactivité accrue au milieu de polymérisation et permettant d'atteindre rapidement la gélification du prépolymère formé intermédiairement en une durée allant par exemple à 180°C de plusieurs dizaines de secondes à une dizaine de minutes; un pareil enseignement n'est pas utilisable par la Demanderesse qui souhaite pouvoir disposer de nouveaux polymères qui, lorsqu'ils sont sous la forme de prépolymères thermodurcissables, vont gélifier au bout de durées plus longues.

En définitive, la présente invention concerne de nouveau polymères à groupements imides qui vont satisfaire, pour le moins, à l'objectif en matières de temps de gel mentionnés ci-avant, caractérisés en ce qu'ils comprennent le produit de réaction entre:

(a) un N,N'-bis-imide ou une association de plusieurs bis-imides de formule:

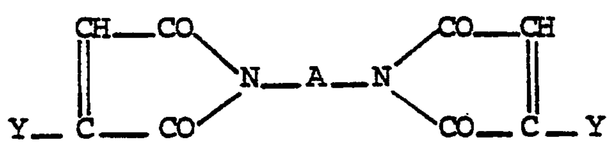

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-I,3 ; méthyl-2 phénylène-I,3 ; méthyl-5 phénylène-I,3 ; diéthyl-2,5 méthyl-3 phénylène-I,4 ; et les radicaux de formule :

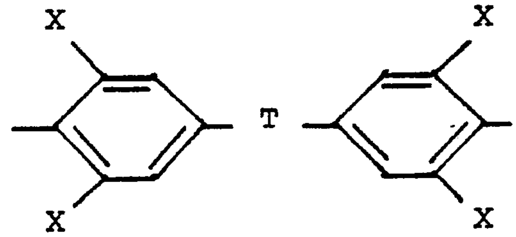

dans laquelle T représente un lien valentiel simple ou un groupement :

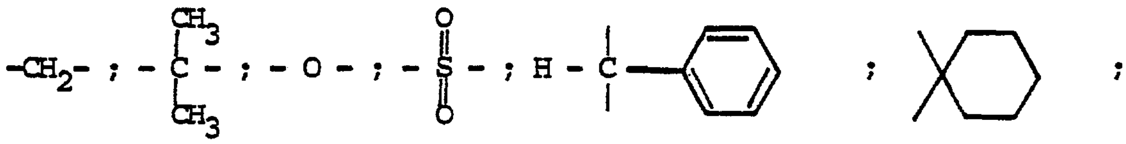

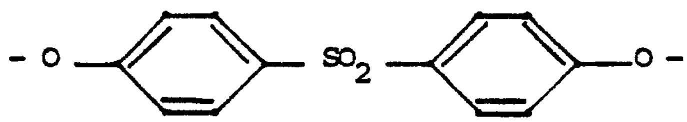

et X représente un atome d'hydrogène, un radical méthyle, éthyle ou isopropyle ;

(b) une ou plusieurs alkényloxyanilines de formule :

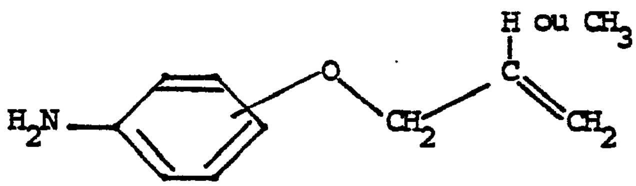 (II)

dans laquelle le radical allyloxy ou méthallyloxy est en position ortho, méta ou para par rapport à l'atome de carbone du cycle benzénique relié à l'azote,

et éventuellement (c) un ou plusieurs autres monomères copolymérisables de formule :

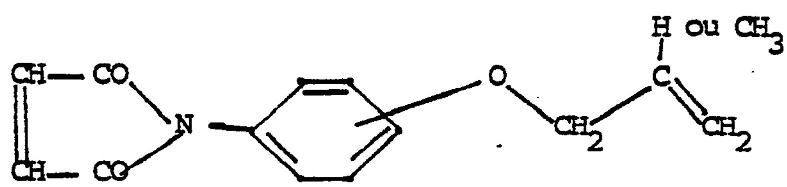 (III)

dans laquelle le radical allyloxy ou méthallyloxy est en position ortho, méta ou para par rapport à l'atome de carbone du cycle benzénique relié à l'azote.

A titre d' exemples spécifiques de bis-imides de formule (I), on peut citer en particulier :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-l,4-bis-maléimide,
- le N,N'-4,4'-diphényl-l,l cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-l,3-bis-maléimide,
- le N,N'-méthyl-4 phénylène-l,3-bis-maléimide,
- le N,N'-méthyl-5 phénylène-l,3-bis-maléimide,

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide, le N,N'-méthyl-5 phénylène-1,3-bis-maléimide.

En ce qui concerne le réactif aminé (b), il est choisi parmi :
- l'allyloxy-2 aniline,
- l'allyloxy-3 aniline,
- l'allyloxy-4 aniline,
- le méthallyloxy-2 aniline,
- le méthallyloxy-3 aniline,
- le méthallyloxy-4 aniline,
- et leurs mélanges.

Ces composés peuvent être préparés selon les procédés décrits dans les références suivantes : Journal of American Chemical Society, 70, pages 592 à 594 (1948) ; Chemical Abstracts, 51, 4423 C (1957) ; Journal of American Chemical Society, 44, pages 1741 à 1744 (1922) ; Bulletin de la Société Chimique de France 1962, pages 2154 à 2157.

En ce qui concerne le réactif facultatif (c), il est choisi parmi :
- le N-(allyloxy-2 phényl) maléimide,
- le N-(allyloxy-3 phényl) maléimide,
- le N-(allyloxy-4 phényl) maléimide,
- le N-(méthallyloxy-2 phényl) maléimide,
- le N-(méthallyloxy-3 phényl) maléimide,
- le N-(méthallyloxy-4 phényl) maléimide,
- et leurs mélanges.

Les maléimides de formule (III) sont des produits nouveaux qui peuvent être notamment préparés à partir des aminophénols (ortho, méta ou para), selon la réaction de Claisen.

On peut par exemple faire réagir l'aminophénol, dont on a préalablement bloqué la fonction amine par réaction avec l'anhydride acétique pour former l'acétamidophénol, avec selon le cas un halogénure d'allyle (le plus souvent le bromure) ou de méthallyle en solution dans l'acétone et en présence de carbonate dipotassique. La fonction amine est ensuite régénérée par hydrolyse.

On prépare ensuite de manière classique le maléimide correspondant en faisant réagir en solution l'allyloxyaniline ou la méthallyloxyaniline obtenue précédemment avec l'anhydride maléique, en présence d'anhydride acétique, de triéthylamine et d'un sel de nickel (acétate de nickel en particulier).

On obtient ainsi le N-(allyloxyphényl)-maléimide ou le N-(méthallyloxyphényl)-maléimide.

Le N-(allyloxy-4 phényl)maléimide est un solide de couleur jaune moutarde ayant un point de fusion de 103°C environ.

L'analyse RMN est en accord avec la structure suivante :

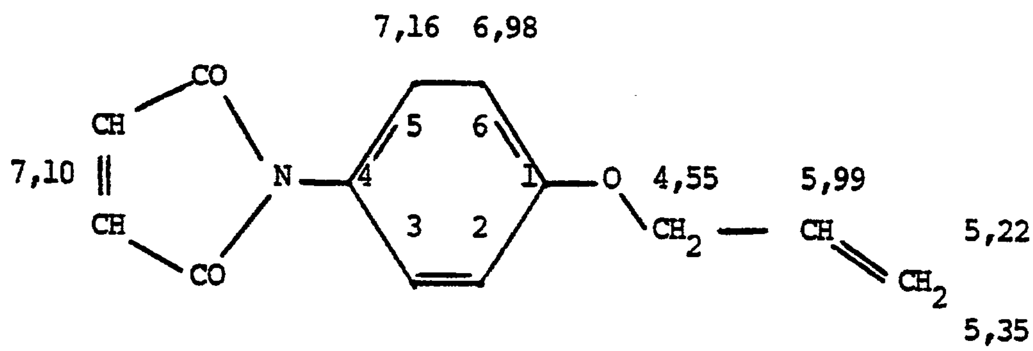

RMN 1H ; solvant : DMSO d6 ; référence : hexaméthyldisiloxane (HMDS)
δ 7,16 (2H,m) : H 3,5 ;
δ 7,10 (2H,s) : maléimido ;
δ 6,98 (2H,m) : H 2,6 ;
δ 5,99 (1H,m) : -CH= ;
δ 5,35 et 5,22 (2H,dd) : $=CH_2$ ;
δ 4,55 (2H,d) : $OCH_2$.

Le N-(allyloxy-3 phényl)maléimide est un liquide jaune orange visqueux, qui cristallise lentement à température ambiante et qui bout à 150°C environ sous une pression 20 Pa.

L'analyse RMN est en accord avec la structure suivante :

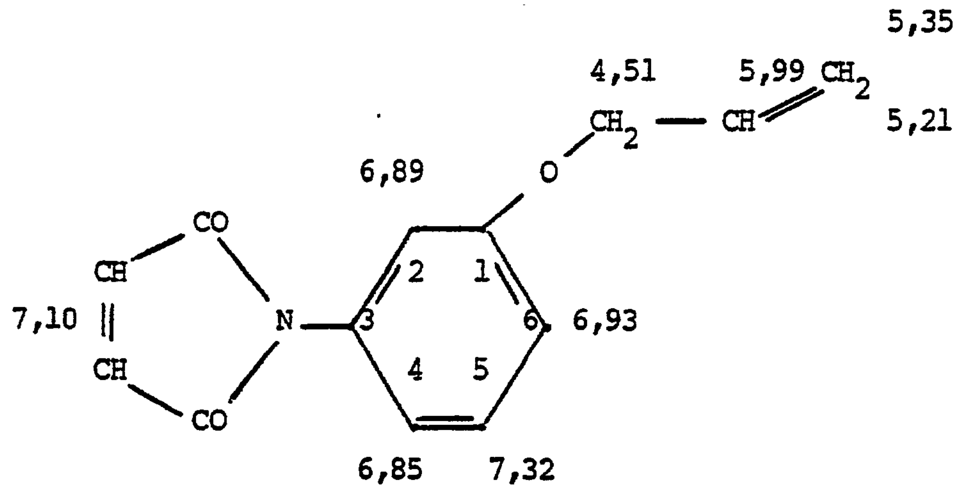

RMN IH ; solvant : DMSO d6 ; référence : HMDS
δ 6,85, 6,89 et 6,93 (3H,m) : H4, H2 et H6 ;
δ 7,I0 (2H,s) : maléimido ;
δ 7,32 (IH,t) : H5 ;
δ 5,99 (IH,m) : -CH= ;
δ 5,35 et 5,2I (2H,dd) : $=CH_2$ ;
δ 4,5I (2H,d) : $OCH_2$.

Le N-(allyloxy-2 phényl)maléimide est un solide cristallisé jaune clair, ayant un point de fusion d'environ 82°C et un point d'ébullition de I48°C à I55°C sous une pression de 20 Pa.

L'analyse RMN est en accord avec la structure suivante :

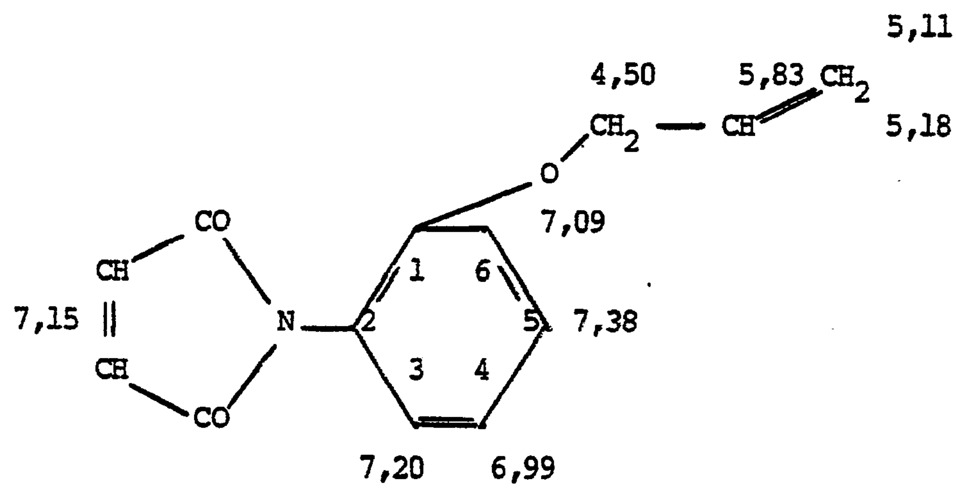

RMN IH ; solvant : DMSO d6 ; référence : HMDS
δ 7,38 (IH,dt) : H5 ;
δ 7,20 (IH,dd) : H3 ;
δ 7,I5 (2H,s) : maléimido ;
δ 7,09 (IH,dd) : H6 ;
δ 6,99 (IH,dt) : H4 ;
δ 5,83 (IH,m) : -CH= ;
δ 5,I8 et 5,II (2H,dd) : $=CH_2$ ;
δ 4,50 (2H,d) : $OCH_2$.

Le N-(méthallyloxy-4 phényl) maléimide est un solide de couleur beige ayant un point de fusion de 64°C.

L'analyse RMN est en accord avec la structure suivante :

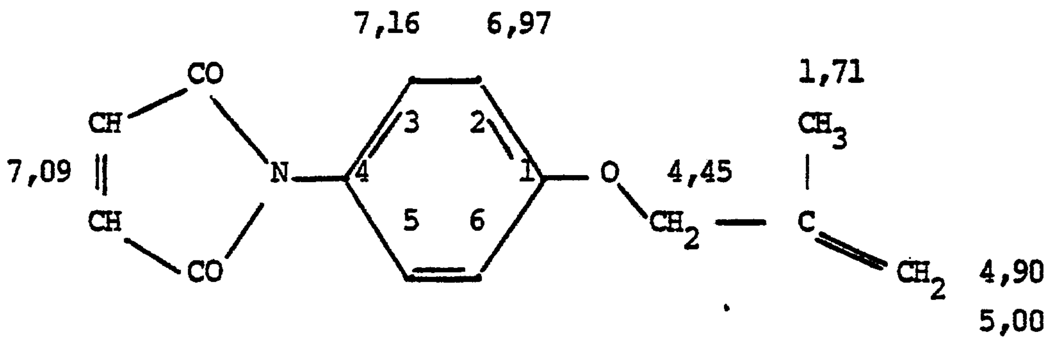

RMN IH ; solvant : DMSO d6 ; référence : HMDS
δ 7,I6 (2H,d) : H 3,5 ;
δ 7,09 (2H,s) : maléimido ;
δ 6,97 (2H,d) : H 2,6 ;
δ 4,90 et 5,00 (IH,s) : $CH_2$= ;
δ 4,45 (2H,s) : $OCH_2$ ;
δ I,7I (3H,s) : $CH_3$.

Le N-(méthallyloxy-3 phényl) maléimide est un solide de couleur beige ayant un point de fusion de 39°C.

L'analyse RMN est en accord avec la structure suivante :

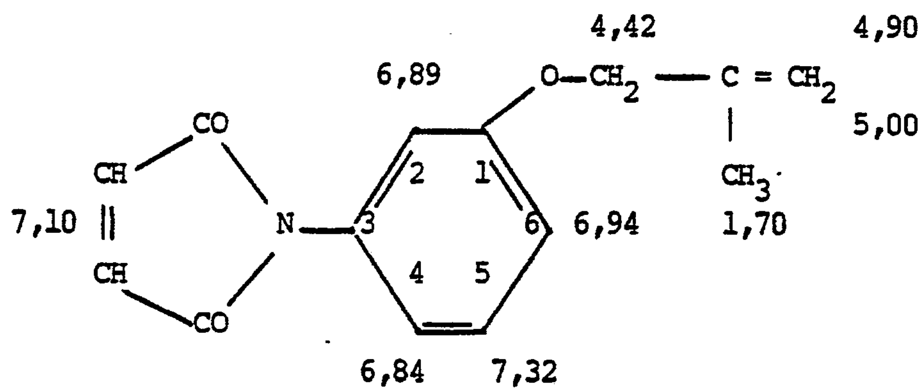

RMN IH ; solvant : DMSO d6 ; référence : HMDS
δ 7,32 (IH,t) : H5 ;
δ 7,I0 (2H,s) : maléimido ;
δ 6,94 (IH,d) : H6 ;
δ 6,89 (IH,s) : H2 ;
δ 6,84 (IH,d) : H4 ;
δ 4,90 et 5,00 (IH,I) : $CH_2$= ;
δ 4,42 (2H,s) : $OCH_2$ ;
δ I,70 (3H,s) : $CH_3$.

Le N-(méthallyloxy-2 phényl) maléimide est un solide de couleur beige ayant un point de fusion de 96°C.

L'analyse RMN est en accord avec la structure suivante :

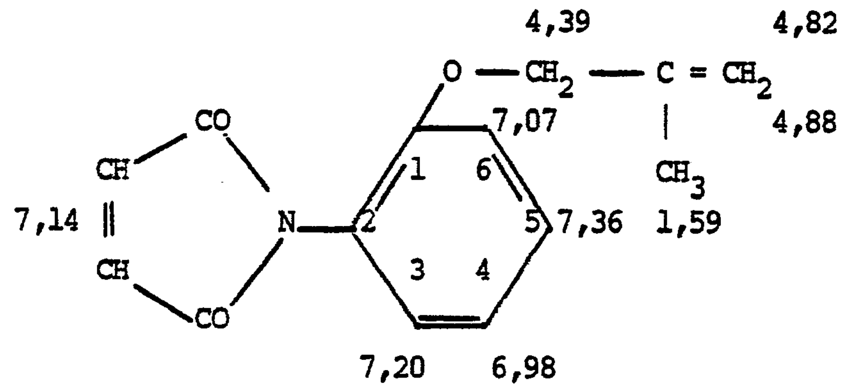

RMN IH ; solvant : DMSO d6 ; référence : HMDS
δ 7,36 (IH,t) : H5 ;
δ 7,20 (IH,d) : H3 ;
δ 7,I4 (2H,s) : maléimido ;
δ 7,07 (IH,d) : H6 ;
δ 6,98 (IH,t) : H4 ;
δ 4,82 et 4,88 (IH,s) : $CH_2$= ;
δ 4,39 (2H,s) : $OCH_2$ ;
δ I,59 (3H,s) : $CH_3$.

Vis-à-vis des polymères obtenus, selon le brevet français n° I 555 564, par chauffage d'un N,N'-bis-imide et d'une diamine, le remplacement de la diamine par un réactif aminé tel que (b) :
. en utilisant par ailleurs des proportions de réactifs déterminées de manière à ce que le rapport $r_1$ :

$$\frac{\text{nombre de groupements imides}}{\text{nombre de groupements } NH_2}$$

soit du même ordre que celui utilisé (rapport $r_2$) pour confectionner le polymère bis-imide/diamine pris en comparaison,
. permet d'obtenir de façon inattendue des polymères thermodurcissables d'une part présentant une évolution beaucoup plus faible au cours du temps de la viscosité à l'état fondu, à une température où le prépolymère possède une viscosité compatible avec une mise en oeuvre facile et d'autre part conduisant à des résines durcies ayant des propriétés mécaniques tout aussi excellentes. La possiblité de pouvoir disposer de polymères thermodurcissables dont la viscosité à l'état fondu évolue très peu est un avantage qui facilite grandement la mise en oeuvre de ces polymères, en particulier dans des applications nécessitant des temps d'injection de plusieurs heures.

L'ajout, à côté du bis-imide (a) et du réactif aminé (b), du réactif facultatif (c) est une mesure qui permet d'augmenter davantage la fluidité des prépolymères et d'améliorer la résistance à l'usure et au choc des articles moulés obtenus.

A noter qu'un autre avantage lié à la mise en oeuvre de la présente invention, par rapport aux polymères obtenus selon l'art antérieur précité, réside dans l'absence de diamine biprimaire libre dans le polymère thermodurcissable à transformer, ce qui est également très appréciable car il s'agit là de composés aminés dont certains peuvent présenter une certaine toxicité.

Les quantités de N,N'-bis-imide(s) (a), de réactif aminé (b) et éventuellement de réactif copolymérisable (c) sont choisies de façon à ce que le rapport $r_1$ :

$$\frac{\text{nombre de groupements imides}}{\text{nombre de groupements } NH_2}$$

se situe dans l'intervalle allant de I/I à I0/I et de préférence allant de I,5/I à 5/I.

Par ailleurs, le nombre de groupements imides apportés par le réactif copolymérisable (c), quand on choisit d'en utiliser un, représente jusqu'à 30 % du nombre total de groupements imides apportés par les réactifs (a) + (c) et de préférence se situe dans l'intervalle allant de I0 à 25 %.

Les polymères selon l'invention peuvent être préparées par chauffage direct du ou des bis-imide(s) (a), du réactif aminé (b) et éventuellement du réactif (c) au moins jusqu'à l'obtention d'un mélange liquide homogène. La température peut varier en fonction de l'état physique des composés en présence mais elle se situe généralement entre 50°C et 250°C. Il est avantageux de maintenir les composés de départ dans un état de mélange intime avant et pendant le chauffage. Selon les caractéristiques physiques des ingrédients, cette mesure peut consister à appliquer les techniques usuelles pour le mélange de solide finement divisés ou bien à effectuer une suspension d'une partie des ingrédients dans un ou plusieurs autres ingrédients à l'état liquide.

La préparation des polymères selon l'invention peut aussi être effectuée par chauffage du mélange des réactifs au sein d'un diluant organique qui est liquide dans une partie au moins de l'intervalle 50°C - 250°C. Parmi ces diluants, on peut mentionner en particulier des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement l20°C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200°C [en général ce point de ramollissement est compris entre 50° et l50°C]. Ces prépolymères peuvent être obtenus en masse en chauffant le mélange des réactifs jusqu'à l'obtention d'un produit homogène ou pâteux à une température généralement située entre 40° et l80°C pendant une durée qui peut aller de quelques minutes à quelques heures, cette durée étant d'autant plus brève que la température adoptée est plus élevée. La préparation des prépolymères peut également être effectuée en suspension ou en solution dans un diluant qui est liquide dans une partie au moins de l'intervalle 50° - 200°C.

Dans le cas où l'on choisit de faire appel au réactif facultatif (c), il faut noter que ces prépolymères (P) peuvent également être obtenus en formant, à partir du ou des bis-imide(s) (a) et du réactif (c), un prépolymère (PP) qui est ensuite mis à réagir avec le réactif aminé (b). On peut encore préparer au préalable un prépolymère (P'P') en chauffant le mélange de réactif aminé (b) et de réactif (c), puis en le faisant réagir avec le ou les bis-imide(s) (a) pour obtenir le prépolymère (P). Les conditions de température et de durée utilisées pour la préparation des prépolymères (PP) ou (P'P') et pour leur transformation en prépolymères (P) sont celles indiquées ci-avant à propos de la préparation des prépolymères (P) par mélange direct des réactifs (a), (b) et éventuellement (c).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300°C, généralement comprises entre l50°C et 250°C ; une mise en forme complémentaire peut être effectuée pendant le durcissement, éventuellement sous vide ou sous une pression super-atmosphérique, ces opérations pouvant également être consécutives. Le durcissement peut être effectué en présence d'un initiateur de polymérisation radicalaire tel le péroxyde de lauroyle, l'azobisisobutyronitrile ou d'un catalyseur de polymérisation anionique tel que le diazabicyclooctane.

Dans le cas où l'on choisit de faire appel au réactif facultatif (c), on ne sort pas du cadre de l'invention si l'on prépare des polymères selon l'invention, qui ne sont pas sous l'aspect de prépolymères (P), en utilisant un mélange intime de prépolymère (P'P') et de bis-imide(s) (a) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des températures de 200 à 300°C. A titre d'exemples, ils conviennent pour la fabrication d'isolants ou plaques ou tubulaires pour transformateurs électriques, de supports de circuits imprimés, de pignons, de bagues etc... Ces polymères sont plus particulièrement adaptés à une mise en oeuvre par injection dans des renforts compacts constitués par des fibres minérales ou organiques tressées dans plusieurs directions. Cette technique nécessite des temps d'injection très longs compte-tenu de la compacité des renforts et demande donc une matière polymère fluide pour assurer une bonne pénétration dans le renfort et présentant une faible viscosité qui doit peu évoluer dans le temps à la température choisie pour réaliser l'injection (par exemple de l'ordre de 70°C à ll0°C). Ces polymères conviennent bien encore à la technique de l'enroulement filamentaire destinée à la réalisation de pièces de révolution, technique utilisée notamment pour faire des pièces relevant des industries automobile et aéronautique.

Les exemples suivants sont donnés à titre illustratif, mais non limitatif.

EXEMPLE I

I. Un réacteur en verre, muni d'un agitateur en acier inoxydable de type ancre et d'une tubulure latérale permettant le départ des produits volatils, est préchauffé dans un bain à l30°C.

On introduit successivement :

- 3l,9 g (0,2l4l mole) d'allyloxy-3 aniline,
- et 78,l g (0,2l8l mole) de N,N'-4,4'-diphénylméthane-bis-maléimide [le rapport $r_1$ est égal ici à 2,04/l].

La masse réactionelle est maintenue à l30°C. On effectue au bout de 30 minutes, 38 minutes, 60 minutes et l20 minutes des prélèvements et sur chacun de ces prélèvements on mesure la viscosité (viscosité dynamique) du prépolymère obtenu et on évalue l'évolution de cette viscosité au cours du temps à une température où le prépolymère possède une viscosité compatible avec une mise en oeuvre facile ; les résultats se présentent comme suivant :

TABLEAU 1

| durée de réaction à 130°C | Température de mesure de la viscosité | Viscosité dynamique | |
|---|---|---|---|
| | | initiale | évolution |
| 30 mn | 70°C | 22 poises | 44 poises après 45 min à 70°C |
| 38 mn | 70°C | 34 poises | 54 poises après 4 h à 70°C |
| 60 mn | 80°C | 26,5 poises | 37 poises après 3 h à 80°C |
| 120 mn | 100°C | 99 poises | 156 poises après 3 h à 100°C |

On peut observer que la viscosité, de manière générale évolue très peu.

Une partie de la masse réactionnelle correspondant à une durée de réaction à l30°C de 36 minutes a été isolée puis dégazée pendant 2 minutes sous une pression réduite de l300 Pa et finalement coulée dans un moule préchauffé à l30°C afin de préparer des plaques de prépolymère de dimensions l40 × l00 × 4 mm. Les plaques obtenues sont soumises au cycle de cuisson suivant :

. 30 minutes entre l30°C et l60°C (chauffage progressif),
. puis 2 heures à l60°C,
. puis 20 minutes entre l60°C et 200°C (chauffage progressif),
. puis 2 heures à 200°C,
. puis 30 minutes entre 200°C et 250°C (chauffage progressif),
. puis l5 heures à 250°C,
. puis l heure entre 250°C et l00°C (refroidissement progressif).

Après démoulage, les plaques à base de polymère durci sont découpées pour obtenir des éprouvettes de dimensions 30 × 7 × 4 mm sur lesquelles on mesure la résistance (Rf) et le module (Mf) en flexion à 20°C et à 250°C [norme ASTM D 790-63 ; distance entre appuis : 25,4 mm] :

- à 20°C : Rf = l92 MPa
Mf = 3240 Mpa
- à 250°C : Rf = 88,5 MPa
Mf = l750 MPa

2. A titre d'essai comparatif (essai A), on a reproduit les opérations décrites ci-avant, mais en utilisant cette fois du diamino-4,4' diphénylméthane à la place de l'allyloxyaniline.

Dans le réacteur décrit ci-avant, préchauffé à l60°C, on charge en 4 minutes un mélange pulvérulent à base de :

- l40,9 g (0,3936 mole) de N,N'-4,4'-diphénylméthane-bis-maléimide,
- et 39,l g (0,l975 mole) de diamino-4,4'-diphénylméthane [le rapport $r_2$ est égal ici à l,99/l].

Après I0 minutes d'agitation à I60°C dont 4 minutes sous pression réduite de 260 Pa, on obtient un prépolymère dont les caractéristiques de viscosité se présentent comme suivant :

TABLEAU 2

| Température de mesure de la viscosité | Viscosité dynamique | |
|---|---|---|
| | initiale | évolution |
| 90°C | 23 poises | 122 poises après 30 min à 90°C |
| 110°C | 3 poises | 48 poises après 30 min à 110°C |
| 120°C | 3 poises | 126 poises après 30 min à 120°C |

On peut observer dans ce cas que la viscosité évolue très rapidement vers de hautes valeurs.

Le prépolymère obtenu est ensuite moulé, durci et testé comme indiqué ci-avant. A noter que le cycle de cuisson est le suivant :

. 40 minutes entre I60°C et 200°C (chauffage progressif),
. puis 2 heures à 200°C,
. puis 30 minutes entre 200°C et 250°C (chauffage progressif),
. puis I6 heures à 250°C,
. puis I heure entre 250°C et I00°C (refroidiseement progressif).

Résultats de flexion :

- à 20°C : Rf = 226 MPa
Mf = 2970 MPa
- à 250°C : RF = 58,5 MPa
Mf = I325 MPa

EXEMPLE 2

Dans le réacteur utilisé à l'exemple I, préchauffé à I30°C, on introduit successivement :

- I4,55 g (0,0976 mole) d'allyloxy-3 aniline,
- et 45,45 g (0,I269 mole) de N,N'-4,4'-diphénylméthane-bis-maléimide [le rapport $r_1$ est égal ici à 2,60/I].

La masse réactionnelle est maintenue pendant 37 minutes dans le réacteur, puis le prépolymère obtenu est dégazé pendant 2 minutes sous pression réduite de I300 Pa et il est ensuite moulé, durci et testé comme indiqué à l'exemple I (paragraphe I).

Le prépolymère a une viscosité initiale de 67 poises à 70°C ; après 60 minutes à 70°C, la viscosité monte à 97 poises.

Résultat de flexion :

- à 20°C : Rf = I85 MPa
Mf = 3I80 MPa
- à 250°C : Rf = I25 MPa
Mf = 2440 MPa

EXEMPLE 3

I. Dans le réacteur utilisé à l'exemple I, préchauffé à I30°C, on introduit successivement :

- I5,54 g (0,I043 mole) d'allyloxy-3 aniline,
- 37,3 g (0,I042 mole) de N,N'-4,4'-diphénylméthane-bis-maléimide
- et 7,I4 g (0,03I2 mole) de N-(allyloxy-3 phényl) maléimide [le rapport $r_1$ est égal ici à 2,29/I et le nombre de groupements imides apportés par le N-(allyloxy-3 phényl) maléimide représente I3 % du nombre total de groupements imides apportés par les réactifs].

La masse réactionnelle est maintenue pendant 37 minutes dans le réacteur, puis le prépolymère obtenu

est dégazé pendant 2 minutes sous pression réduite de l300 Pa et il est ensuite moulé, durci et testé comme indiqué à l'exemple l. A noter que le cycle de cuisson est ici le suivant :
- 2 heures à l30°C,
. puis 25 minutes entre l30°C et l60°C (chauffage progressif),
. puis l heure à l60°C,
. puis 35 minutes entre l60°C et 200°C (chauffage progressif),
. puis l heure à 200°C,
. puis 30 minutes entre 200°C et 250°C (chauffage progressif),
. puis l5 heures et 30 minutes à 250°C,
. puis l heure entre 250°C et l00°C (refroidissement progressif).

Le prépolymère a une viscosité initiale de 7,7 poises à 70°C ; après l00 minutes à 70°C, la viscosité monte à 8,l poises.

Resultats en flexion :
- à 20°C : Rf = l63 MPa
Mf = 3365 MPa
- à 250°C : Rf = 8l,5 MPa
Mf = l970 MPa

2. Description de la préparation du N-(allyloxy-3 phényl) maléimide :

Ce composé a été préparé à partir de l'allyloxy-3 aniline dont un mode de préparation est décrit dans Chemical Abstracts, 5l, 4423c (l957).

Dans un réacteur en verre muni d'une agitation centrale, d'un thermomètre et d'un réfrigérant ascendant, maintenu à 50°C sous agitation et dans lequel circule un léger courant d'azote, on introduit simultanément en 20 minutes, à l'aide de deux ampoules de coulée :
- 498 g d'une solution acétonique contenant 298,0 d'allyloxy-3 aniline,
- 498 g d'une solution acétonique contenant 225,4 g d'anhydride maléique,
- rinçage de chaque ampoule de coulée par 20 cm3 d'acétone,
- 326,4 g d'anhydride acétique,
- 90,8 g de triéthylamine,
- 3,8 cm3 de solution aqueuse à 0,0528 mole de sulfate de nickel pour l00 cm3 de solution,
- 2698 g d'eau distillée.

L'addition des 2698 g d'eau distillée au mélange réactionnel conduit à la décantation d'une huile de couleur foncée, que l'on extrait par trois fois 250 cm3 d'acétate d'éthyle. Les couches organiques obtenues sont rassemblées et séchées sur du sulfate de sodium.

Après élimination à sec du solvant sur pression réduite (d'abord sous 3000 Pa environ, puis sous 70 Pa environ), on obtient 464 g d'une huile épaisse très foncée titrant 0,309 double liaison éthylénique pour l00g.

On prélève 22,77 g de ce produit brut auxquels on ajoute 0,2 g d'hydroquinone. On distille sous l2 Pa, dans un réacteur de 50 cm3 muni d'une colonne Vigreux et d'un séparateur de fractions.

On recueille l4,7 g de fraction passant entre l50°C et l55°C sous 20 Pa.

C'est un liquide visqueux, limpide, jaune-orangé, présentant un spectre de RMN en accord avec la structure N-(allyloxy-3 phényl) maléimide.

**Revendications pour les Etats contractants: BE, CH, DE, FR, GB, IT, LI, LU, NL, SE**

l - Polymères à groupements imides caractérisés en ce qu'ils comprennent le produit de réaction entre :
(a) un N,N'-bis-imide ou une association de plusieurs bis-imides de formule :

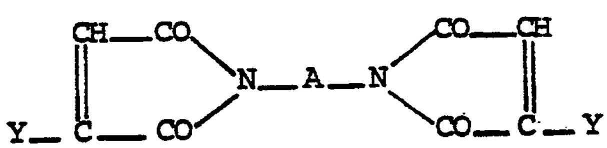
(I)

dans laquelle :
. le symbole Y représente H, $CH_3$ ou Cl
. le symbole A représente un radical divalent choisi dans le groupe constitué par les radicaux : cyclohexylènes ; phénylènes ; méthyl-4 phénylène-l,3 ; méthyl-2 phénylène-l,3 ; méthyl-5 phénylène-l,3 ; diéthyl-2,5 méthyl-3 phénylène-l,4 ; et les radicaux de formule :

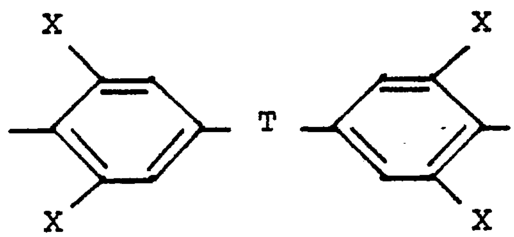

dans laquelle T représente un lien valentiel simple ou un groupement :

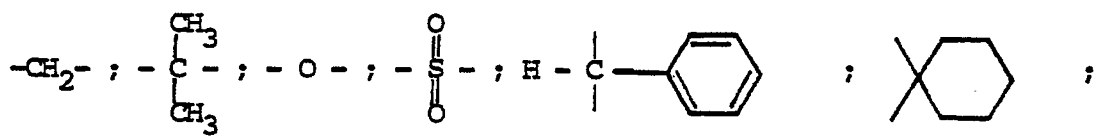

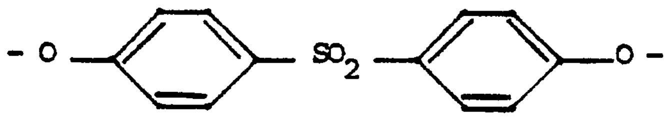

et X représente un atome d'hydrogène, un radical méthyle, éthyle ou isopropyle ;
(b) une ou plusieurs alkényloxyanilines de formule :

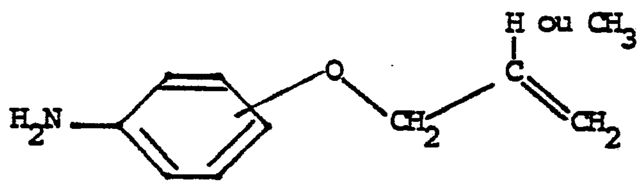
(II)

dans laquelle le radical allyloxy ou méthallyloxy est en position ortho, méta ou para par rapport à l'atome de carbone du cycle benzénique relié à l'azote ;
et éventuellement (c) un ou plusieurs autres monomères copolymérisables de formule :

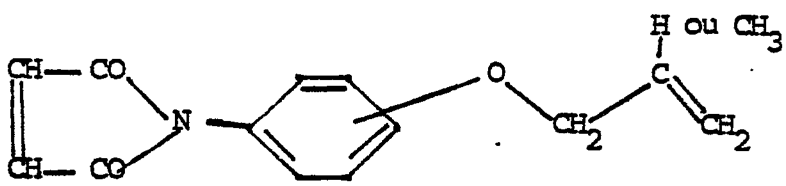
(III)

dans laquelle le radical allyloxy ou méthallyloxy est en position ortho, méta ou para par rapport à l'atome de carbone du cycle benzénique relié à l'azote.

2 - Polymères selon la revendication I, caractérisés en ce que d'une part les quantités de N,N'-bis-imides (a), de réactif aminé (b) et éventuellement de réactif copolymérisable (c) sont choisies de façon à ce que le rapport $r_1$ :

$$\frac{\text{nombre de groupements imides}}{\text{nombre de groupements } NH_2}$$

se situe dans l'intervalle allant de l/l à l0/l et de préférence allant de l,5/l à 5/l, et d'autre part le nombre de groupements imides apportés par le réactif copolymérisable (c), quand on choisit d'en utiliser un, représente jusqu'à 30 % du nombre total de groupements imides apportés par les réactifs (a) + (c) et de préférence se situe dans l'intervalle allant de l0 à 25 %.

3 - Polymères selon l'une quelconque des revendications I et 2, caractérisés en ce qu'ils se trouvent

sous forme de polymères durcis, insolubles dans les solvants usuels et ne présentent pas de ramollissement notable au dessous de la température à laquelle ils commencent à se dégrader.

4 - Polymères selon l'une quelconque des revendications I et 2, caractérisés en ce qu'ils se trouvent sous forme de prépolymères thermodurcissables (P) solubles dans les solvants organiques polaires et présentent un point de ramollissement à une température inférieure à 200°C.

5 - Procédé de préparation de polymères durcis selon les revendications I, 2 et 3, caractérisé en ce que l'on chauffe directement le mélange des réactifs à une température comprise entre 50° et 250°C.

6 - Procédé de préparation selon la revendication 5, caractérisé en ce qu'il consiste à chauffer le mélange des réactifs entre 50°C et I80°C pour former dans un premier temps un prépolymères (P), puis à provoquer le durcissement du prépolymères (P) par chauffage à une température comprise entre I50°C et 250°C.

7 - Procédé de préparation de polymères thermodurcissables (P) selon les revendications I, 2 et 4, caractérisé en ce que l'on chauffe directement le mélange des réactifs à une température comprise entre 50°C et I80°C jusqu'à l'obtention d'un produit homogène liquide ou pâteux.

8 - Procédé de préparation selon la revendication 6 ou 7, caractérisé en ce que, lorsque l'on fait appel au réactif facultatif (c), il consiste à former, à partir du ou des bis-imide(s) (a) et du réactif (c), un prépolymère (PP), puis à chauffer ce prépolymère (PP) avec le réactif aminé (b) pour obtenir le prépolymère (P).

9 - Procédé de préparation des polymères selon la revendication 6 ou 7, caractérisé en ce que, lorsque l'on fait appel au réactif facultatif (c), il consiste à former, à partir du réactif aminé (b) et du réactif (c), un prépolymère (P'P'), puis à chauffer ce prépolymère (P'P') avec le ou les bis-imide(s) (a) pour obtenir le prépolymère (P).

I0 - Application des polymères selon l'une quelconque des revendications I à 4 à la fabrication d'objets moulés, de revêtements, d'articles à structure cellulaire et de matériaux composites renforcés et imprégnés.

**Revendications pour l'Etat contractant: AT**

I - Procédé de préparation de polymères à groupements imides se trouvant sous forme de polymères durcis, insolubles dans les solvants usuels et ne présentant pas de ramollissement notable en dessous de la température à laquelle ils commencent à se dégrader, caractérisé par le fait que l'on chauffe directement à une température comprise entre 50°C et 250° C le mélange des réactifs suivants :

(a) un N,N'-bis-imide ou une association de plusieurs bis-imides de formule :

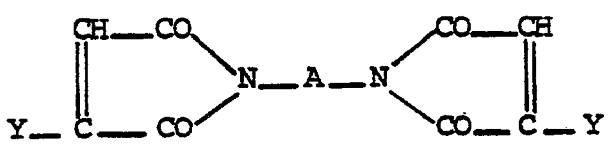

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-I,3 ; méthyl-2 phénylène-I,3 ; méthyl-5 hénylène-I,3 ; diéthyl-2,5 méthyl-3 phénylène-I,4 ; et les radicaux de formule :

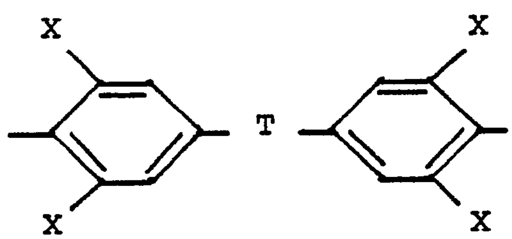

dans laquelle T représente un lien valentiel simple ou un groupement :

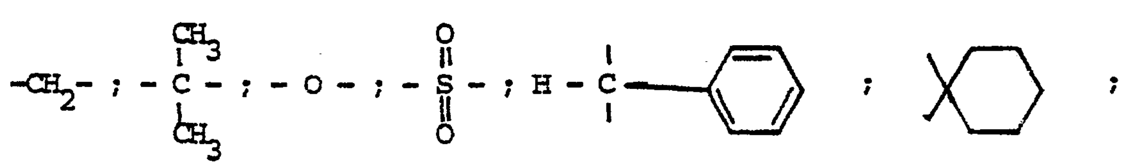

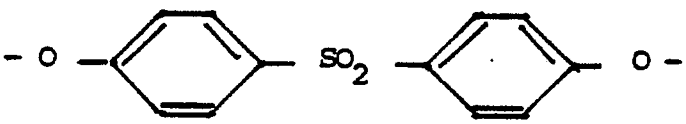

et X représente un atome d'hydrogène, un radical méthyle, éthyle ou isopropyle ;
(b) une ou plusieurs alkényloxyanilines de formule :

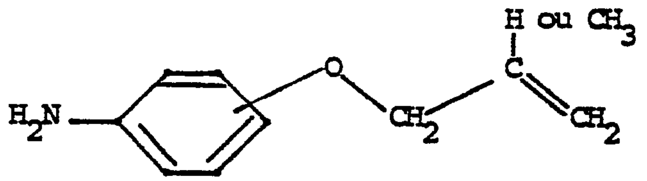

(II)

dans laquelle le radical allyloxy ou méthallyloxy est en position ortho, méta ou para par rapport à l'atome de carbone du cycle benzénique relié à l'azote ;
et éventuellement (c) un ou plusieurs autres monomères copolymérisables de formule :

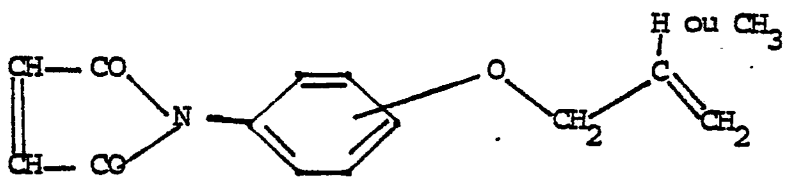

(III)

dans laquelle le radical allyloxy ou méthallyloxy est en position ortho, méta ou para par rapport à l'atome de carbone du cycle benzénique relié à l'azote.

2 - Procédé de préparation de polymères à groupements imides se trouvant sous forme de prépolymères thermodurcissables (P) solubles dans les solvants organiques polaires et présentant un point de ramollissement à une température inférieure à 200° C, caractérisé par le fait que l'on chauffe directement le mélange des réactifs (a), (b) et éventuellement (c) définis ci-avant dans la revendication I à une température comprise entre 50° C et l80°C jusqu'à l'obtention d'un produit homogène liquide ou pâteux.

3 - Procédé selon la revendication 2, caractérisé en ce qu'il consiste à chauffer le mélange des réactifs entre 50°C et l80°C pour former dans un premier temps un prépolymère (P), puis à provoquer le durcissement du prépolymère (P) par chauffage à une température comprise entre l50°C et 250°C.

4 - Procédé selon la revendication 2 ou 3, caractérisé en ce que, lorsque l'on fait appel au réactif facultatif (c), il consiste à former, à partir du ou des bis-imide(s) (a) et du réactif (c), un prépolymère (PP), puis à chauffer ce prépolymère (PP) avec le réactif aminé (b) pour obtenir le prépolymère (P).

5 - Procédé selon la revendication 2 ou 3, caractérisé en ce que, lorsque l'on fait appel au réactif facultatif (c), il consiste à former, à partir du réactif aminé (b) et du réactif (c), un prépolymère (P'P'), puis à chauffer ce prépolymère (P'P') avec le ou les bis-imide(s) (a) pour obtenir le prépolymère (P).

6 - Procédé selon l'une quelconque des revendications I à 5, caractérisé en ce que d'une part les quantités de N,N'-bis-imides (a), de réactif aminé (b) et éventuellement de réactif copolymérisable (c) sont choisies de façon à ce que le rapport $r_1$ :

$$\frac{\text{nombre de groupements imides}}{\text{nombre de groupements } NH_2}$$

se situe dans l'intervalle allant de l/l à l0/l et de préférence allant de l,5/l à 5/l, et d'autre part le nombre de groupements imides apportés par le réactif copolymérisable (c), quand on choisit d'en utiliser un, représente jusqu'à 30 % du nombre total de groupements imides apportés par les réactifs (a) + (c) et de préférence se situe dans l'intervalle allant de l0 à 25 %.

7 - Application des polymères préparés selon l'une quelconque des revendications I à 6 à la fabrication d'objets moulés, de revêtements, d'articles à structure cellulaire et de matériaux composites renforcés et imprégnés.

**Revendications pour l'Etat contractant: ES**

I - Procédé de préparation de polymères à groupements imides se trouvant sous forme de polymères durcis, insolubles dans les solvants usuels et ne présentant pas de ramollissement notable en dessous de la température à laquelle ils commencent à se dégrader, caractérisé par le fait que l'on chauffe directement à une température comprise entre 50° C et 250° C le mélange des réactifs suivants :

(a) un N,N'-bis-imide ou une association de plusieurs bis-imides de formule :

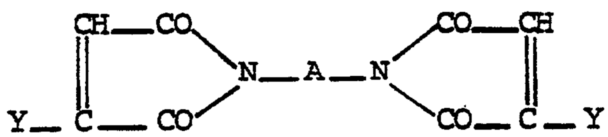 (I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-l,3 ; méthyl-2 phénylène-l,3 ; méthyl-5 hénylène-l,3 ; diéthyl-2,5 méthyl-3 phénylène-l,4 ; et les radicaux de formule :

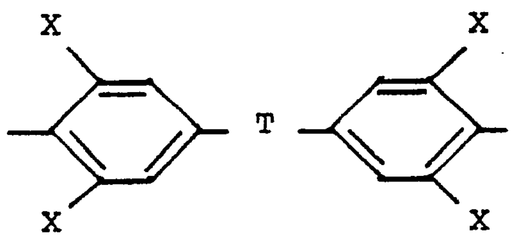

dans laquelle T représente un lien valentiel simple ou un groupement :

$-CH_2-$ ; 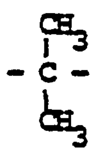 ; $-O-$ ; 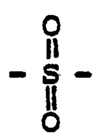 ; 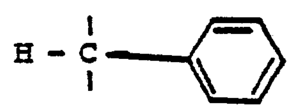 ; 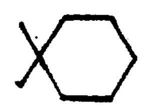 ;

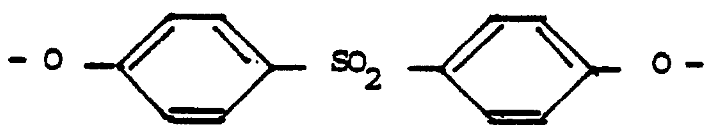

et X représente un atome d'hydrogène, un radical méthyle, éthyle ou isopropyle ;

(b) une ou plusieurs alkényloxyanilines de formule :

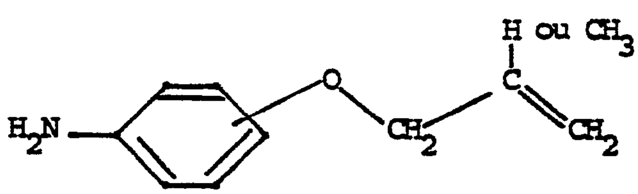 (II)

dans laquelle le radical allyloxy ou méthallyloxy est en position ortho, méta ou para par rapport à l'atome de carbone du cycle benzénique relié à l'azote ;

et éventuellement (c) un ou plusieurs autres monomères copolymérisables de formule :

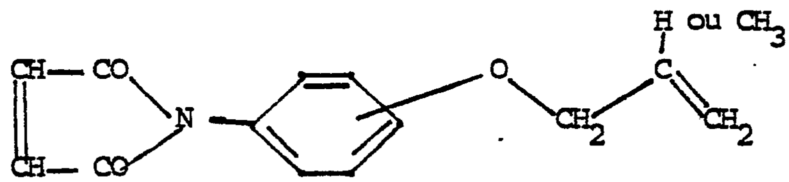 (III)

dans laquelle le radical allyloxy ou méthallyloxy est en position ortho, méta ou para par rapport à l'atome de carbone du cycle benzénique relié à l'azote.

2 - Procédé de préparation de polymères à groupements imides se trouvant sous forme de prépolymères thermo durcissables (P) solubles dans les solvants organiques polaires et présentant un point de ramollissement à une température inférieure à 200° C, caractérisé par le fait que l'on chauffe directement le mélange des réactifs (a), (b) et éventuellement (c) définis ci-avant dans la revendication I à une température comprise entre 50° C et I80°C jusqu'à l'obtention d'un produit homogène liquide ou pâteux.

3 - Procédé selon la revendication 2, caractérisé en ce qu'il consiste à chauffer le mélange des réactifs entre 50°C et I80°C pour former dans un premier temps un prépolymère (P), puis à provoquer le durcissement du prépolymère (P) par chauffage à une température comprise entre I50°C et 250°C.

4 - Procédé selon la revendication 2 ou 3, caractérisé en ce que, lorsque l'on fait appel au réactif facultatif (c), il consiste à former, à partir du ou des bis-imide(s) (a) et du réactif (c), un prépolymère (PP), puis à chauffer ce prépolymère (PP) avec le réactif aminé (b) pour obtenir le prépolymère (P).

5 - Procédé selon la revendication 2 ou 3, caractérisé en ce que, lorsque l'on fait appel au réactif facultatif (c), il consiste à former, à partir du réactif aminé (b) et du réactif (c), un prépolymère (P'P'), puis à chauffer ce prépolymère (P'P') avec le ou les bis-imide(s) (a) pour obtenir le prépolymère (P).

6 - Procédé selon l'une quelconque des revendications I à 5, caractérisé en ce que d'une part les quantités de N,N'-bis-imides (a), de réactif aminé (b) et éventuellement de réactif copolymérisable (c) sont choisies de façon à ce que le rapport $r_1$ :

$$\frac{\text{nombre de groupements imides}}{\text{nombre de groupements } NH_2}$$

se situe dans l'intervalle allant de I/I à I0/I et de préférence allant de I,5/I à 5/I, et d'autre part le nombre de groupements imides apportés par le réactif copolymérisable (c), quand on choisit d'en utiliser un, représente jusqu'à 30 % du nombre total de groupements imides apportés par les réactifs (a) + (c) et de préférence se situe dans l'intervalle allant de I0 à 25 %.

7 - Application des polymères préparés selon l'une quelconque des revendications I à 6 à la fabrication d'objets moulés, de revêtements, d'articles à structure cellulaire et de matériaux composites renforcés et imprégnés.

**Claims for the Contracting States: BE, CH, DE, FR, GB, IT, LI, LU, NL, SE**

1. Polymers containing imide groups, characterized in that they comprise the product of reaction between:

(a) an N,N'-bisimide or a combination of several bisimides of formula:

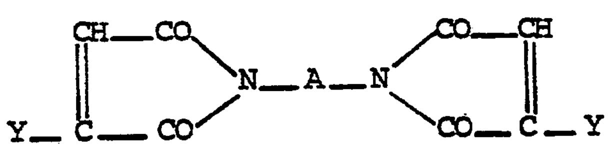 (I)

in which

the symbol Y denotes H, $CH_3$ or Cl

the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

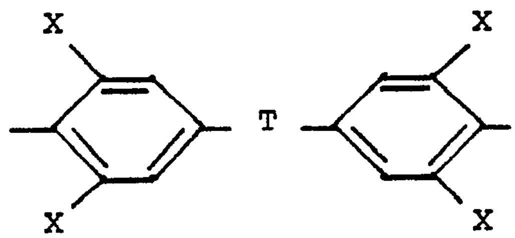

in which T denotes a single valency bond or a group:

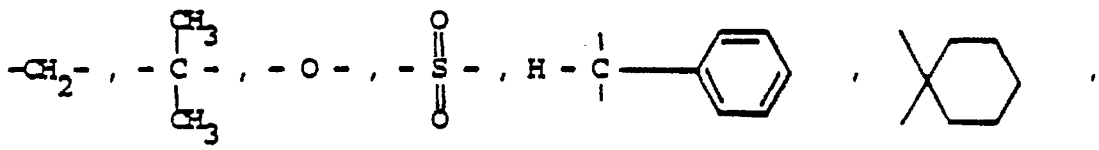

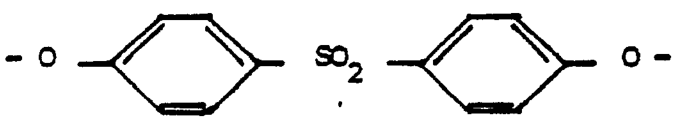

and X denotes a hydrogen atom or a methyl, ethyl or ispropyl radical;
(b) one or more alkenyloxyanilines of formula:

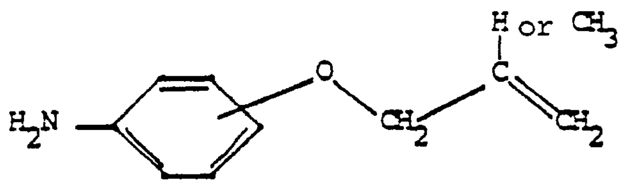 (II)

in which the allyloxy or methallyloxy radical is in an ortho, meta or para position in relation to the benzene ring carbon atom bonded to the nitrogen;
and if desired, (c) one or more other copolymerizable monomers of formula:

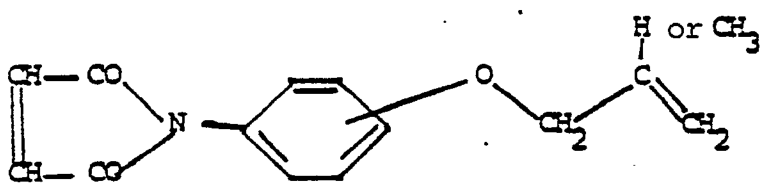 (III)

in which the allyloxy or methallyloxy radical is in an ortho, meta or para position in relation to the benzene ring carbon atom bonded to the nitrogen.

2. Polymers according to Claim 1, characterized in that, on the one hand, the quantities of N,N'-bisimides (a), of amine reactant (b) and, if desired, of copolymerizable reactant (c) are chosen so that the ratio $r_1$:

$$\frac{\text{number of imide groups}}{\text{number of } NH_2 \text{ groups}}$$

is situated in the range from 1/1 to 10/1 and preferably from 1.5/1 to 5/1, and, on the other hand, the number of imide groups contributed by the copolymerizable reactant (c), when it is chosen to employ one of these, represents up to 30% of the total number of imide groups contributed by the reactants (a) + (c) and is preferably situated in the range from 10 to 25%.

3. Polymers according to either of Claims 1 and 2, characterized in that they are in the form of cured polymers, insoluble in the usual solvents and exhibiting no appreciable softening below the temperature at which they begin to decompose.

4. Polymers according to either of Claims 1 and 2, characterized in that they are in the form of thermosetting prepolymers (P) soluble in polar organic solvents and having a softening point at a temperature below 200°C.

5. Process for the preparation of cured polymers according to Claims 1, 2 and 3, characterized in that the mixture of the reactants is heated directly to a temperature of between 50° and 250°C.

6. Process of preparation according to Claim 5, characterized in that it consists in heating the mixture of the reactants between 50°C and 180°C to form a prepolymer (P) in a first step, and in then causing the prepolymer (P) to be cured by heating at a temperature between 150°C and 250°C.

7. Process for the preparation of thermosetting polymers (P) according to Claims 1, 2 and 4, characterized in that the mixture of the reactants is heated directly to a temperature of between 50°C and 180°C until a homogeneous liquid or pasty product is obtained.

8. Preparation process according to Claim 6 or 7, characterized in that, when the optional reactant (c) is used, it consists in forming a prepolymer (PP) from the bisimide(s) (a) and from the reactant (c), and in then heating this prepolymer (PP) with the amine reactant (b) to obtain the prepolymer (P).

9. Process for the preparation of polymers according to Claim 6 or 7, characterized in that, when the optional reactant (c) is used, it consists in forming a prepolymer (P'P') from the amine reactant (b) and from the reactant (c), and in then heating this prepolymer (P'P') with the bisimide(s) (a) to obtain the prepolymer (P).

10. Application of the polymers according to any one of Claims 1 to 4 to the manufacture of moulded articles, coatings, articles of cellular structure and reinforced and impregnated composite materials.

**Claims for the Contracting State: AT**

1. Process for the preparation of polymers containing imide groups in the form of cured polymers, insoluble in the usual solvents and exhibiting no appreciable softening below the temperature at which they begin to decompose, characterized by the fact that the mixture of the following reactants is heated directly to a temperature of between 50°C and 250°C:

(a) an N,N'-bisimide or a combination of several bisimides of formula:

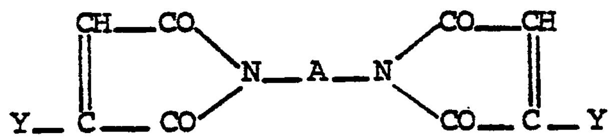

(I)

in which

the symbol Y denotes H, $CH_3$ or Cl

the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

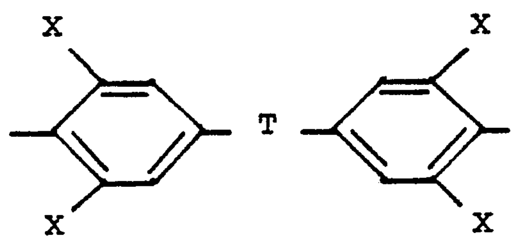

in which T denotes a single valency bond or a group:

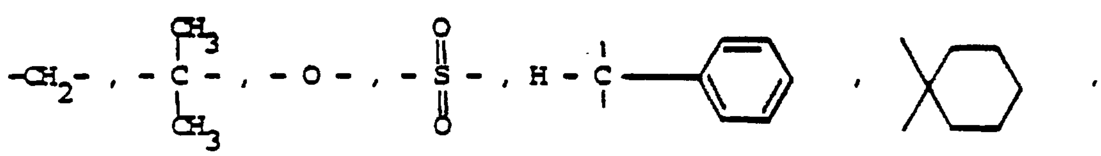

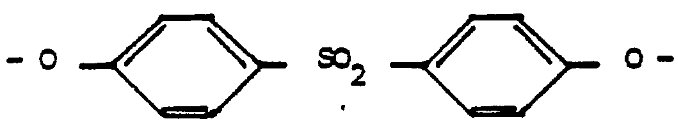

and X denotes a hydrogen atom or a methyl, ethyl or isopropyl radical;
(b) one or more alkenyloxyanilines of formula:

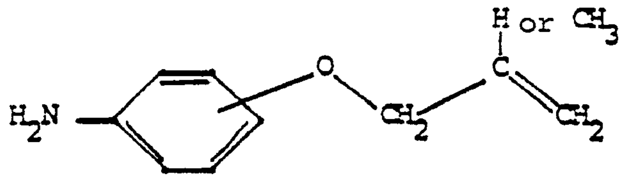
(II)

in which the allyloxy or methallyloxy radical is in an ortho, meta or para position in relation to the benzene ring carbon atom bonded to the nitrogen;
and if desired, (c) one or more other copolymerizable monomers of formula:

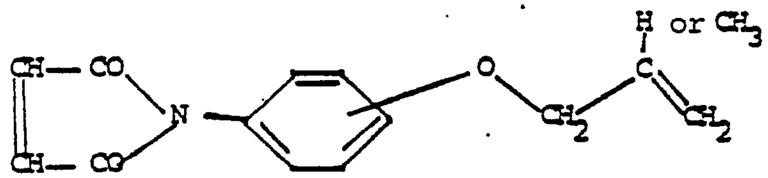
(III)

in which the allyloxy or methallyloxy radical is in an ortho, meta or para position in relation to the benzene ring carbon atom bonded to the nitrogen.

2. Process for the preparation of polymers containing imide groups in the form of thermosetting prepolymers (P) soluble in polar organic solvents and having a softening point at a temperature below 200°C, characterized by the fact that the mixture of the reactants (a), (b) and if desired (c) defined above in Claim 1, is heated directly to a temperature of between 50°C and 180°C until a homogeneous liquid or pasty product is obtained.

3. Process according to Claim 2, characterized in that it consists in heating the mixture of the reactants between 50°C and 180°C to form a prepolymer (P) in a first step, and in then causing the prepolymer (P) to be cured by heating at a temperature between 150°C and 250°C.

4. Process according to Claim 2 or 3, characterized in that, when the optional reactant (c) is used, it consists in forming a prepolymer (PP) from the bisimide(s) (a) and from the reactant (c), and in then heating this prepolymer (PP) with the amine reactant (b) to obtain the prepolymer (P).

5. Process according to Claim 2 or 3, characterized in that, when the optional reactant (c) is used, it consists in forming a prepolymer (P′P′) from the amine reactant (b) and from the reactant (c), and in then heating this prepolymer (P′P′) with the bisimide(s) (a) to obtain the prepolymer (P).

6. Process according to any of Claims 1 to 5, characterized in that, on the one hand, the quantities of N,N′-bisimides (a), of amine reactant (b) and, if desired, of copolymerizable reactant (c) are chosen so that the ratio $r_1$:

$$\frac{\text{number of imide groups}}{\text{number of } NH_2 \text{ groups}}$$

is situated in the range from 1/1 to 10/1 and preferably from 1.5/1 to 5/1, and, on the other hand, the number of imide groups contributed by the copolymerizable reactant (c), when it is chosen to employ one of these, represents up to 30% of the total number of imide groups contributed by the reactants (a) + (c) and is preferably situated in the range from 10 to 25%.

7. Application of the polymers prepared according to any one of Claims 1 to 6 to the manufacture of moulded articles, coatings, articles of cellular structure and reinforced and impregnated composite materials.

**Claims for the Contracting State: ES**

1. Process for the preparation of polymers containing imide groups in the form of cured polymers, insoluble in the usual solvents and exhibiting no appreciable softening below the temperature at which they begin to decompose, characterized by the fact that the mixture of the following reactants is heated directly to a temperature of between 50°C and 250°C:
(a) an N,N′-bisimide or a combination of several bisimides of formula:

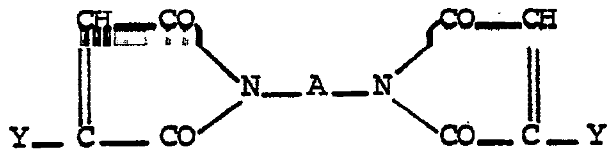 (I)

in which
the symbol Y denotes H, $CH_3$ or Cl
the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

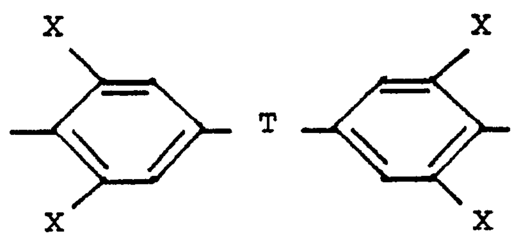

in which T denotes a single valency bond or a group:

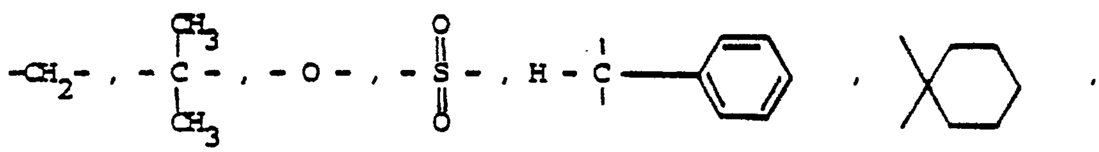

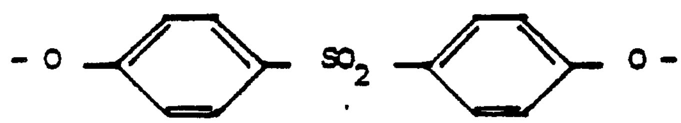

and X denotes a hydrogen atom or a methyl, ethyl or isopropyl radical;
(b) one or more alkenyloxyanilines of formula:

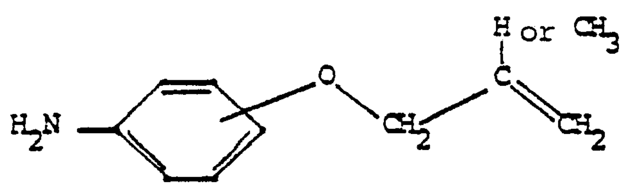 (II)

in which the allyloxy or methallyloxy radical is in an ortho, meta or para position in relation to the benzene ring carbon atom bonded to the nitrogen;
and if desired, (c) one or more other copolymerizable monomers of formula:

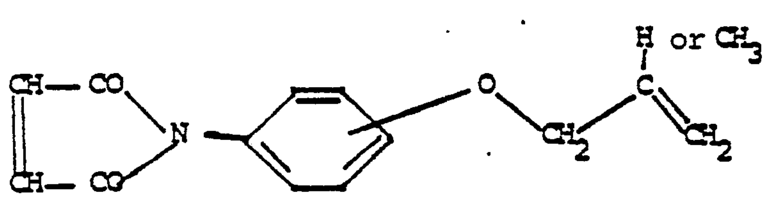 (III)

in which the allyloxy or methallyloxy radical is in an ortho, meta or para position in relation to the benzene ring carbon atom bonded to the nitrogen.

2. Process for the preparation of polymers containing imide groups in the form of thermosetting prepolymers (P) soluble in polar organic solvents and having a softening point at a temperature below 200°C, characterized by the fact that the mixture of the reactants (a), (b) and if desired (c) defined

above in Claim 1, is heated directly to a temperature of between 50°C and 180°C until a homogeneous liquid or pasty product is obtained.

3. Process according to Claim 2, characterized in that it consists in heating the mixture of the reactants between 50°C and 180°C to form a prepolymer (P) in a first step, and in then causing the prepolymer (P) to be cured by heating at a temperature between 150°C and 250°C.

4. Process according to Claim 2 or 3, characterized in that, when the optional reactant (c) is used, it consists in forming a prepolymer (PP) from the bisimide(s) (a) and from the reactant (c), and in then heating this prepolymer (PP) with the amine reactant (b) to obtain the prepolymer (P).

5. Process according to Claim 2 or 3, characterized in that, when the optional reactant (c) is used, it consists in forming a prepolymer (P'P') from the amine reactant (b) and from the reactant (c), and in then heating this prepolymer (P'P') with the bisimide(s) (a) to obtain the prepolymer (P).

6. Process according to any of Claims 1 to 5, characterized in that, on the one hand, the quantities of N,N'-bisimides (a), of amine reactant (b) and, if desired, of copolymerizable reactant (c) are chosen so that the ratio $r_1$:

$$\frac{\text{number of imide groups}}{\text{number of } NH_2 \text{ groups}}$$

is situated in the range from 1/1 to 10/1 and preferably from 1.5/1 to 5/1, and, on the other hand, the number of imide groups contributed by the copolymerizable reactant (c), when it is chosen to employ one of these, represents up to 30% of the total number of imide groups contributed by the reactants (a) + (c) and is preferably situated in the range from 10 to 25%.

7. Application of the polymers prepared according to any one of Claims 1 to 6 to the manufacture of moulded articles, coatings, articles of cellular structure and reinforced and impregnated composite materials.

**Patentansprüche für die Vertragsstaaten: BE, CH, DE, FR, GB, IT, LI, LU, NL, SE**

1. Polymere mit Imidgruppen, dadurch gekennzeichnet, daß sie das Reaktionsprodukt enthalten zwischen

(a) einem N,N'-Bisimid oder einer Assoziation von mehreren Bisimiden der Formel

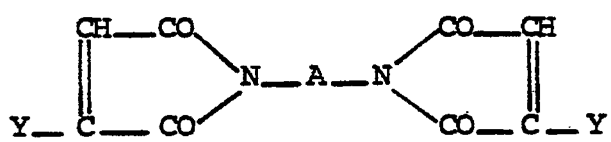

(I)

worin

das Symbol Y für H, $CH_3$ oder Cl steht

das Symbol A einen zweiwertigen Rest bedeutet,

ausgewählt unter den Cyclohexylen-, Phenylen-, 4-Methyl-1,3-phenylen-, 2-Methyl-1,3-phenylen, 5-Methyl-1,3-phenylen-, 2,5-Diethyl-3-methyl-1,4-phenylenresten und den Resten der Formel

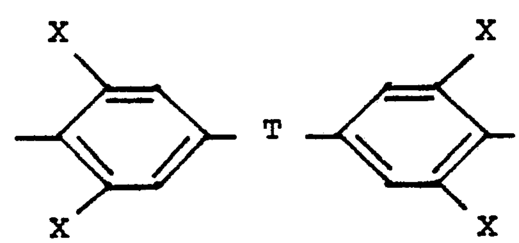

worin T eine einfache Valenzbindung oder eine Gruppe

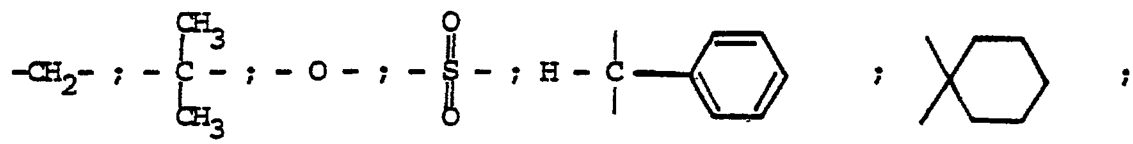

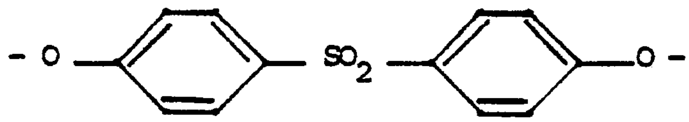

wiedergibt, und X ein Wasserstoffatom, einen Methyl-, Ethyl- oder Isopropylrest bedeutet;
(b) einem oder mehreren Alkenyloxyalininen der Formel

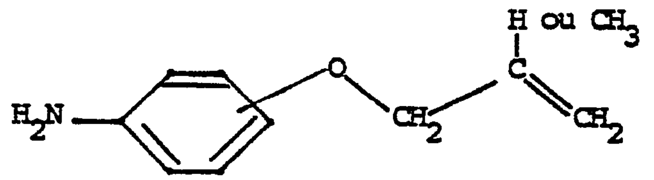 (II)

worin sich der Allyloxy- oder Methallyloxyrest in ortho-, meta- oder para-Stellung bezogen auf das Kohlenstoffatom des Benzolrings, das an den Stickstoff gebunden ist, befindet;
und gegebenenfalls (c) einem oder mehreren weiteren copolymerisierbaren Monomeren der Formel

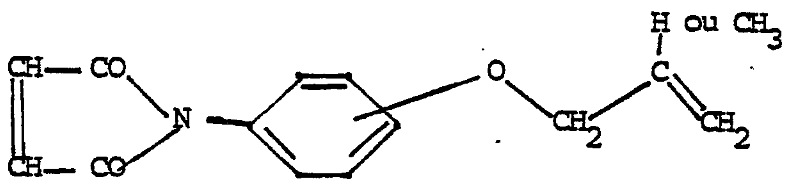 (III)

worin sich der Alloxy- oder Methallyloxyrest in ortho-, meta- oder para-Stellung im Bezug auf das Kohlenstoffatom des Benzolrings, das an das Stickstoffatom gebunden ist, befindet.

2. Polymere gemäß Anspruch 1, dadurch gekennzeichnet, daß einerseits die Mengen der N,N'-Bisimide (a), des Aminreagens (b) und gegebenenfalls des copolymerisierbaren Reagens (c) derart ausgewählt sind, daß das Verhältnis $r_1$

$$\frac{\text{Anzahl der Imidgruppen}}{\text{Anzahl der } NH_2\text{-Gruppen}}$$

im Bereich von 1/1 bis 10/1 und vorzugsweise von 1,5/1 bis 5/1 liegt, und andererseits die Anzahl der durch das copolymerisierbare Reagens (c) eingebrachten Imidgruppen, wenn man ein solches verwendet, bis zu 30% der Gesamtanzahl der durch die Reagentien (a) + (c) eingebrachten Imidgruppen beträgt und vorzugsweise im Bereich von 10 bis 25% liegt.

3. Polymere gemäß einem der Ansprüche 1 und 2, dadurch gekennzeichnet, daß sie in Form von gehärteten, in üblichen Lösungsmitteln unlöslichen Polymeren vorliegen und keine merkliche Erweichung unterhalb der Temperatur zeigen, bei der sie sich zu zersetzen beginnen.

4. Polymere gemäß einem der Ansprüche 1 und 2, dadurch gekennzeichnet, daß sie in Form von wärmehärtbaren Prepolymeren (P) vorliegen, die in polaren organischen Lösungsmitteln löslich sind, und einen Erweichungspunkt bei einer Temperatur unterhalb 200°C besitzen.

5. Verfahren zur Herstellung von gehärteten Polymeren gemäß den Ansprüchen 1, 2 und 3, dadurch gekennzeichnet, daß man direkt das Gemisch der Reagentien bei einer Temperatur zwischen 50 und 250°C erhitzt.

6. Verfahren gemäß Anspruch 5, dadurch gekennzeichnet, daß es darin besteht, das Gemisch der Reagentien auf eine Temperatur zwischen 50 und 180°C zu erhitzen, um zu einem ersten Zeitpunkt ein Prepolymeres (P) zu bilden, und hiernach die Härtung der Prepolymeren (P) durch Erhitzen auf eine Temperatur zwischen 150 und 250°C vorzunehmen.

7. Verfahren zur Herstellung von wärmehärtbaren Polymeren (P) gemäß den Ansprüchen 1, 2 und 4, dadurch gekennzeichnet, daß man direkt das Gemisch der Reagentien bei einer Temperatur zwischen 50 und 180°C bis zur Erzielung eines homogenen, flüssigen oder pastenförmigen Produkts erhitzt.

8. Verfahren gemäß Anspruch 6 oder 7, dadurch gekennzeichnet, daß man, wenn man auf das fakultative Reagens (c) zurückgreift, es darin besteht, ausgehend von dem Bisimid oder den Bisimiden (a) und dem Reagens (c) ein Prepolymeres (PP) zu bilden, und hiernach dieses Prepolymere (PP) zu bilden, und hiernach dieses Prepolymere (PP) mit dem Aminreagens (b) zur Herstellung des Prepolymeren (P) zu erhitzen.

9. Verfahren zur Herstellung der Polymeren gemäß Anspruch 6 oder 7, dadurch gekennzeichnet, daß, wenn man auf das fakultative Reagens (c) zurückgreift, es darin besteht, aus dem Aminreagens (b) und dem Reagens (c) ein Prepolymeres (P'P') zu bilden, und hiernach das Prepolymere (P'P') mit dem Bisimid oder den Bisimiden (a) erhitzt, um zu dem Prepolymeren (P) zu gelangen.

10. Verwendung der Polymeren gemäß einem der Ansprüche 1 bis 4 zur Herstellung von Formgegenständen, Überzügen, Artikeln mit Zellstruktur und verstärkten und imprägnierten zusammengesetzten Materialien.

**Patentansprüche für den Vertragsstaat: AT**

1. Verfahren zur Herstellung von Polymeren mit Imidgruppen, die in Form von gehärteten, in üblichen Lösungsmitteln unlöslichen Polymeren vorliegen und keine merkliche Erweichung unterhalb der Temperatur, bei der sie sich zu zersetzen beginnen, zeigen, dadurch gekennzeichnet, daß man direkt bei einer Temperatur zwischen 50 und 250°C das Gemisch der folgenden Reagentien erhitzt:

(a) ein N,N'-Bisimid oder eine Assoziation von mehreren Bisimiden der Formel

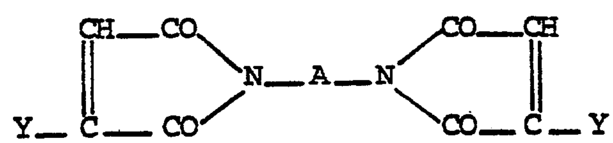

(I)

worin
das Symbol Y für H, $CH_3$ oder Cl
das Symbol A einen zweiwertigen Rest bedeutet,
ausgewählt unter den Cyclohexylen-, Phenylen-, 4-Methyl-1,3-phenylen-, 2-Methyl-1,3-phenylen-, 5-Methyl-1,3-phenylen-, 2,5-Diethyl-3-methyl-1,4-phenylenresten und den Resten der Formel

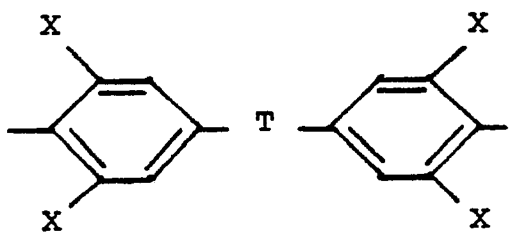

worin T für eine einfache Valenzbindung oder eine Gruppe steht

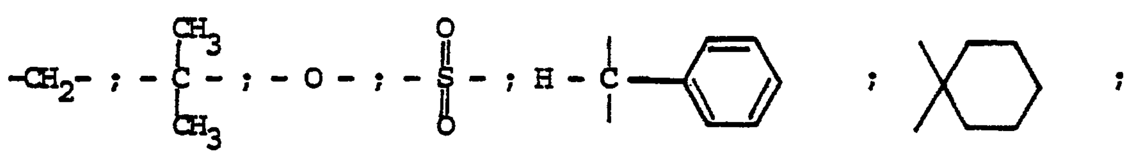

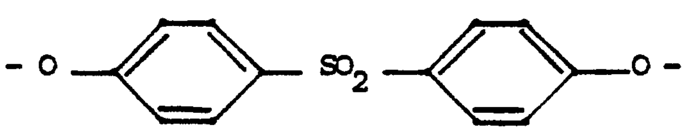

und X ein Wasserstoffatom, einen Methyl-, Ethyl- oder Isopropylrest bedeutet;

(b) eine oder mehrere Alkenyloxyaniline der Formel

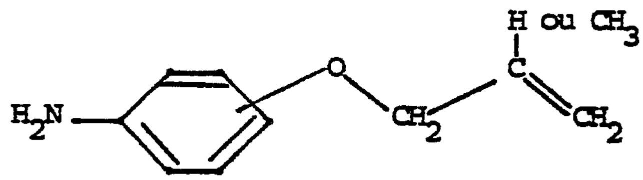 (II)

worin sich der Allyloxy- oder Methallyloxyrest in ortho-, meta- oder para-Stellung, bezogen auf das Kohlenstoffatom des Benzolrings, das an das Stickstoffatom gebunden ist, befindet;
und gegebenenfalls (c) ein oder mehrere weitere copolymerisierbare Monomere der Formel

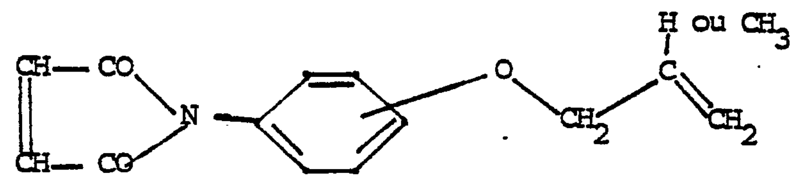 (III)

worin sich der Allyloxy- oder Methallyloxyrest in ortho-, meta- oder para-Stellung im Bezug auf das Kohlenstoffatom des Benzolrings, das an das Stickstoffatom gebunden ist, befindet.

2. Verfahren zur Herstellung von Polymeren mit Imidgruppen, die in Form von wärmehärtbaren Prepolymeren (P) vorliegen, welche in polaren organischen Lösungsmitteln löslich sind, und einen Erweichungspunkt unterhalb einer Temperatur von 200°C besitzen, dadurch gekennzeichnet, daß man direkt das Gemisch der Reagentien (a), (b) und gegebenenfalls (c), wie in Anspruch 1 definiert, bei einer Temperatur zwischen 50 und 180°C zur Erzielung eines homogenen, flüssigen oder pastenförmigen Produkts erhitzt.

3. Verfahren gemäß Anspruch 2, dadurch gekennzeichnet, daß es darin besteht, das Gemisch der Reagentien bei einer Temperatur zwischen 50 und 180°C zu erhitzen, um zu einem ersten Zeitpunkt ein Prepolymeres (P) zu bilden und hiernach die Härtung des Prepolymeren (P) durch Erhitzen auf eine Temperatur zwischen 150 und 250°C vorzunehmen.

4. Verfahren gemäß Anspruch 2 oder 3, dadurch gekennzeichnet, daß, wenn man auf das fakultative Reagens (c) zurückgreift, es darin besteht, aus dem Bisimid oder den Bisimiden (a) und dem Reagens (c) ein Prepolymeres (PP) zu bilden, und hiernach dieses Prepolymere (PP) mit dem Aminreagens (b) zu erhitzen, um zu dem Prepolymeren (P) zu gelangen.

5. Verfahren gemäß Anspruch 2 oder 3, dadurch gekennzeichnet, daß, wenn man auf das fakultative Reagens (c) zurückgreift, es darin besteht, aus dem Aminreagens (b) und dem Reagens (c) ein Prepolymeres (P'P') zu bilden, und hiernach dieses Prepolymere (P'P') mit dem Bisimid oder den Bisimiden (a) zu erhitzen, um zu dem Prepolymeren (P) zu gelangen.

6. Verfahren gemäß einem der Ansprüche 1 bis 5, dadurch gekennzeichnet, daß einerseits die Mengen der N,N'-Bisimide (a), des Aminreagens (b) und gegebenenfalls des copolymerisierbaren Reagens (c) derart gewählt werden, daß das Verhältnis $r_1$

$$\frac{\text{Anzahl der Imidgruppen}}{\text{Anzahl der } NH_2\text{-Gruppen}}$$

im Bereich von 1/1 bis 10/1, und vorzugsweise von 1,5/1 bis 5/1 liegt, und andererseits die Anzahl der durch das copolymerisierbare Reagens (c) eingebrachten Imidgruppen, wenn man ein solches verwendet, bis zu 30% der Gesamtanzahl der durch die Reagentien (a) + (c) eingebrachten Imidgruppen beträgt, und vorzugsweise im Bereich von 10 bis 25% liegt.

7. Verwendung der gemäß einem der Ansprüche 1 bis 6 hergestellten Polymeren zur Herstellung von Formgegenständen, Überzügen, Artikeln mit Zellstruktur und zusammengesetzten verstärkten und imprägnierten Materialien.

**Patentansprüche für den Vertragsstaat: ES**

1. Verfahren zur Herstellung von Polymeren mit Imidgruppen, die in Form von gehärteten, in üblichen Lösungsmitteln unlöslichen Polymeren vorliegen und keine merkliche Erweichung unterhalb der Temperatur, bei der sie sich zu zersetzen beginnen, zeigen, dadurch gekennzeichnet, daß man direkt bei einer Temperatur zwischen 50 und 250°C das Gemisch der folgenden Reagentien erhitzt:
(a) ein N,N'-Bisimid oder eine Assoziation von mehreren Bisimiden der Formel

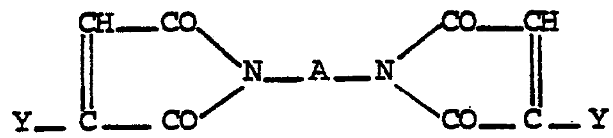 (I)

worin
das Symbol Y für H, $CH_3$ oder Cl
das Symbol A einen zweiwertigen Rest bedeutet,
ausgewählt unter den Cyclohexylen-, Phenylen-, 4-Methyl-1,3-phenylen-, 2-Methyl-1,3-phenylen-, 5-Methyl-1,3-phenylen-, 2-Methyl-1,3-phenylen-, 2,5-Diethyl-3-methyl-1,4-phenylenresten und den Resten der Formel

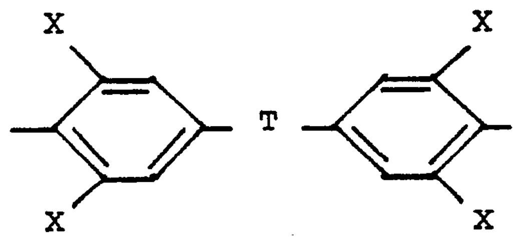

worin T für eine einfache Valenzbindung oder eine Gruppe

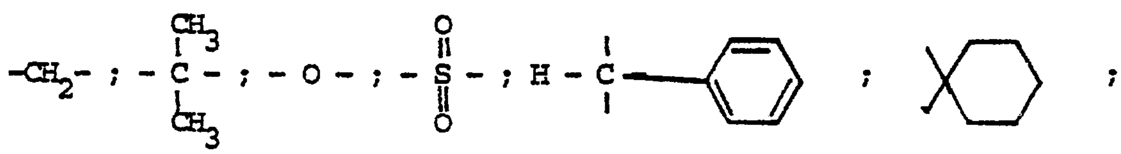

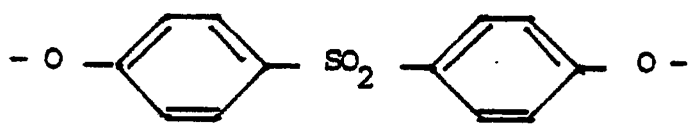

steht, und X ein Wasserstoffatom, einen Methyl-, Ethyl- oder Isopropylrest bedeutet;
(b) eine oder mehrere Alkenyloxyaniline der Formel

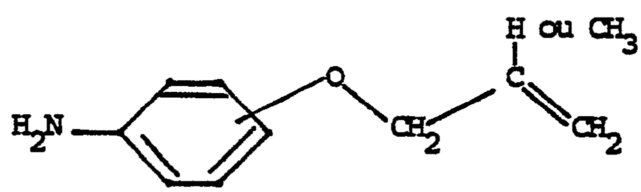 (II)

worin sich der Allyloxy- oder Methallyloxyrest in ortho-, meta- oder para-Stellung, bezogen auf das Kohlenstoffatom des Benzolrings, das an das Stickstoffatom gebunden ist, befindet;
und gegebenenfalls (c) ein oder mehrere weitere copolymerisierbare Monomere der Formel

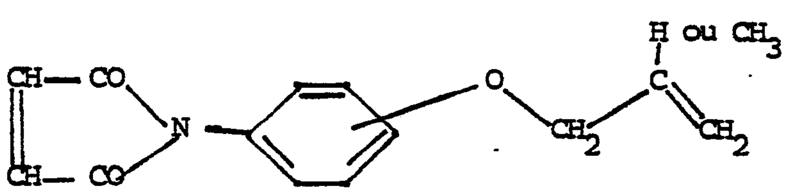 (III)

worin sich der Allyloxy- oder Methallyloxyrest in ortho-, meta- oder para-Stellung im Bezug auf das Kohlenstoffatom des Benzolrings, das an das Stickstoffatom gebunden ist, befindet.
2. Verfahren zur Herstellung von Polymeren mit Imidgruppen, die in Form von wärmehärtbaren Prepolymeren (P) vorliegen, welche in polaren organischen Lösungsmitteln löslich sind und einen Erweichungspunkt unterhalb einer Temperatur von 200°C besitzen, dadurch gekennzeichnet, daß man direkt das Gemisch der Reagentien (a), (b) und gegebenenfalls (c), wie in Anspruch 1 definiert, bei einer Temperatur zwischen 50 und 180°C zur Erzielung eines homogenen, flüssigen oder pastenförmigen Produkts erhitzt.

3. Verfahren gemäß Anspruch 2, dadurch gekennzeichnet, daß es darin besteht, das Gemisch der Reagentien bei einer Temperatur zwischen 50 und 180°C zu erhitzen, um zu einem ersten Zeitpunkt ein Prepolymeres (P) zu bilden und hiernach die Härtung des Prepolymeren (P) durch Erhitzen auf eine Temperatur zwischen 150 und 250°C vorzunehmen.

4. Verfahren gemäß Anspruch 2 oder 3, dadurch gekennzeichnet, daß, wenn man auf das fakultative Reagens (c) zurückgreift, es darin besteht, aus dem Bisimid oder den Bisimiden (a) und dem Reagens (c) ein Prepolymeres (PP) zu bilden, und hiernach dieses Prepolymere (PP) mit dem Aminreagens (b) zu erhitzen, um zu dem Prepolymeren (P) zu gelangen.

5. Verfahren gemäß Anspruch 2 oder 3, dadurch gekennzeichnet, daß, wenn man auf das fakultative Reagens (c) zurückgreift, es darin besteht, aus dem Aminreagens (b) und dem Reagens (c) ein Prepolymeres (P'P') zu bilden, und hiernach dieses Prepolymere (P'P') mit dem Bisimid oder den Bisimiden (a) zu erhitzen, um zu dem Prepolymeren (P) zu gelangen.

6. Verfahren gemäß einem der Ansprüche 1 bis 5, dadurch gekennzeichnet, daß einerseits die Mengen der N,N'-Bisimide (a), des Aminreagens (b) und gegebenenfalls des copolymerisierbaren Reagens (c) derart gewählt werden, daß das Verhältnis $r_1$

$$\frac{\text{Anzahl der Imidgruppen}}{\text{Anzahl der } NH_2\text{-Gruppen}}$$

im Bereich von 1/1 bis 10/1, und vorzugsweise von 1,5/1 bis 5/1 liegt, und andererseits die Anzahl der durch das copolymerisierbare Reagens (c) eingebrachten Imidgruppen, wenn man ein solches verwendet, bis zu 30% der Gesamtanzahl der durch die Reagentien (a) + (c) eingebrachten Imidgruppen beträgt, und vorzugsweise im Bereich von 10 bis 25% liegt.

7. Verwendung der gemäß einem der Ansprüche 1 bis 6 hergestellten Polymeren zur Herstellung von Formgegenständen, Überzügen, Artikeln mit Zellstruktur und zusammengesetzten verstärkten und imprägnierten Materialien.